# EUROPEAN PATENT SPECIFICATION

(11) **EP 2 232 978 B1**
(45) Date of publication and mention of the grant of the patent: **07.12.2011**
(21) Application number: 09156078.9
(22) Date of filing: 24.03.2009
(51) Int. Cl.: A01D 43/08

(54) **Forage harvester**
Feldhäcksler
Récolteuse-hacheuse

(43) Date of publication of application: 29.09.2010
(73) Proprietor: Deere & Company, Moline, IL 61265-8098 (US)
(72) Inventor: Wendling Dr., Ignatz, 66482, Zweibrücken (DE); Betbeder, Laurent, 57220, Varize (FR)
(74) Representative: Holst, Sönke

(56) References cited:
- EP-A1- 1 166 619
- EP-A1- 1 671 530
- EP-A2- 1 956 361
- US-A- 6 119 442

## Description

The invention pertains to a forage harvester comprising:
a chopper means for cutting harvested crop into short lengths,
a kernel processor with at least two rotatively driven rollers defining a gap arranged in the crop flow downstream the chopper means for cracking kernels in the crop,
a sensor arrangement for sensing crop properties,
a control unit coupled to the sensor arrangement and to an actuator operable to adjust the kernel processor gap and/or pressing force of the kernel processor rollers based upon the signals of the sensor arrangement.

### Prior art

Forage harvesters, also called field choppers, are used in agriculture for picking up and chopping harvested crop, for example, corn or grass, which is normally used as fodder for cattle. To promote the digestibility of the fodder, kernel processors are provided downstream of the cutterhead that chops the crop during corn harvest. The kernel processors comprise two or more rotatively driven rollers defining one or more gaps through which the crop is fed. The size of the gap (or a force with which one roller acts upon the other roller) is adjusted in a manner that the kernels in the crop are appropriately cracked, such that their pericarp is opened for a better digestibility of the fodder.

The gap size adjustment is presently performed manually by an operator by adjusting spindles defining the position of one of the rollers, or by remotely driven actuators based upon operator input into an electronic control device (EP 1 600 049 A1). It is however problematic to find an appropriate gap for all harvesting situations, since the optimal gap size depends on the crop throughput and on the physical properties of the kernels, especially their moisture content and ripeness. Thus, in many instances the gap is defined too large, causing a relatively high portion of uncracked kernels, or to small, resulting in an unnecessary high energy consumption of the kernel processor. It was thus proposed to adjust the kernel processor gap automatically based upon the sensed crop moisture (EP 1 166 619 A1). However, this arrangement does not take the ripeness of the crop into account, and also not the actual throughput.

In the prior art, it was also proposed to investigate agricultural products with cameras and image processing systems in order to determine various crop parameters. US 6 119 442 A1 relates to a combine harvester in which threshed crop is under surveillance of a camera. The image is processed in order to detect damaged grain and to control the threshing mechanism accordingly such that grain damage is automatically reduced. EP 1 671 530 A1 describes a forage harvester with a camera arrangement in the spout for an optical investigation of granulometric parameters of the chopped crop in order to adjust the feed roll speed in a manner such that a desired length of cut is achieved.

### Task of the Invention

The problem underlying the invention is to improve a harvesting machine with a kernel processor such that the gap between the kernel processor rollers can be better matched to physical parameters of the crop.

### Solution

This is achieved by the subject matter of claims 1 and 12. The dependent claims recite features improving the invention in an advantageous manner.

A harvesting machine in the form of a forage harvester comprises a chopper means, preferably a cutterhead, for cutting or chopping crop that was collected or cut from a field into more or less short lengths. In the crop flow direction downstream the chopper means, a kernel processor is located that comprises at least two rotatively driven rollers defining a gap through which the chopped crop is fed. A control unit is connected to a sensor arrangement that includes a camera viewing upon the crop flow downstream the kernel processor and an image processing system which processes the video signals of the camera to derive information about the portion of uncracked kernels in the crop flow under investigation. The mentioned information about the portion of uncracked kernels is submitted to the control unit. The control unit is further connected to a remotely driven actuator for adjusting the kernel processor gap and/or the pressing force of the kernel processor rollers. Thus, the control unit adjusts the kernel processor gap and/or force based upon the detected portion of uncracked kernels.

It is an advantage of the invention that the kernel processor gap and/or the pressing force of the kernel processor rollers can automatically be brought to a value at which the relation between the portion of uncracked kernels and the power consumption of the kernel processor corresponds to an optimal value. The result of the kernel cracking operation is directly sensed by the camera and image processing system and the kernel cracking operation is adjusted accordingly.

In particular, the control unit can compare the portion of uncracked kernels with an acceptable portion of uncracked kernels and automatically adjust the kernel processor gap to the largest size and/or the pressing force of the kernel processor rollers to the smallest value at which only an acceptable portion of uncracked kernels is contained in the crop flow. The sensed and acceptable portion of uncracked kernels can be absolute values (for example, the amount or surface of uncracked kernels in one image) or relative values (for example, the number or surface of uncracked kernels in one image divided by the entire number or surface of kernels in that image). Since the portion of uncracked kernels can depend on various factors, for example the farmer's desires, it is useful to provide a user interface allowing the operator to input the acceptable portion of uncracked kernels. In another embodiment, the acceptable portion of uncracked kernels can be predetermined and fixed.

The control unit can also be connected to a sensor for detecting additional crop properties, like the moisture and/or the throughput. The control unit is in this embodiment operable to adjust the kernel processor gap and/or force also based on the sensed crop property. A user interface can be provided for inputting a desired relation between the crop property and the kernel processor gap and/or force.

The image signals from the camera can also be used for providing a feedback signal regarding the length of cut of the crop. The harvesting machine comprises a crop feed arrangement for feeding the harvested crop to the chopper means. One or both of the chopper means and the crop feed arrangement are driven with variable speed, controlled by the control unit. The control unit controls the speed of the chopper means and/or the crop feed arrangement such that the size (for example length, area or volume) of the chopped crop particles, measured with the camera and image processing system of the sensor arrangement corresponds to a desired size. The latter can be input by an operator or automatically established by a second sensor interacting with the crop. The second sensor can measure a crop property, e.g. the moisture of the crop, its nutrient content, its compressibility, or its grain content, and a user interface can be provided for inputting a desired relation between the crop property and the desired length of cut.

When a camera is used for detecting the portion of uncracked kernels and/or the crop size in situ directly above (or below or besides) the flow, it would - due to the relatively high speed of the crop - be useful to use a high speed, black and white or colour camera synchronized with an electronic flash in order to provide light flashes upon the crop within the viewing angle of the camera. In this case, the exposure time can be controlled by the shutter performance (speed) of the camera and is independent on the time duration of the light source. In order to avoid the need of using a camera having a very high shutter speed, another embodiment is using a more common camera and controlling the time duration of the electronic flash or a stroboscope. As with normal photographic cameras, the flash illuminates the crop sample for a quite short time, such that a sharp image is obtained.

### Embodiment of the invention

The figure shows one embodiment of the invention, which is described in greater detail below.

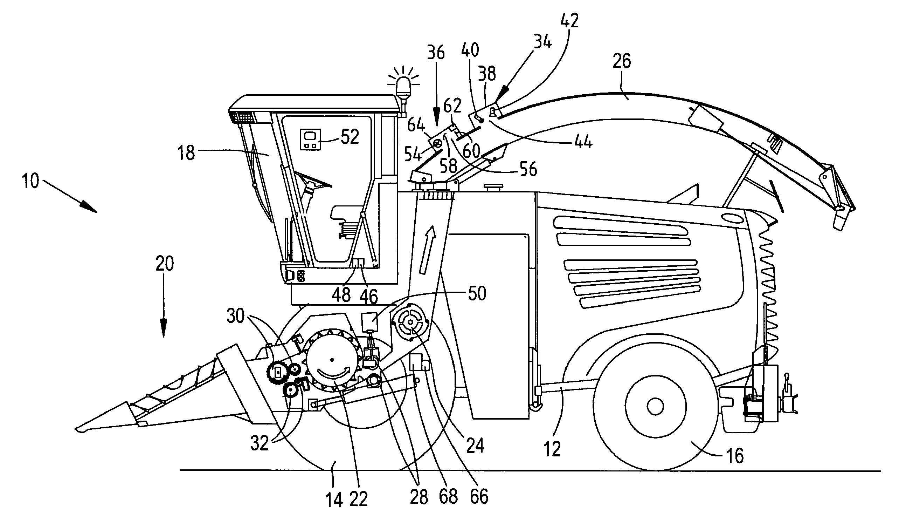

Figure 1 is a schematic, left side elevational view of a harvesting machine in which the present invention is used.

Referring now to Figure 1, there is shown a self-propelled harvesting machine in the form of a forage harvester 10 including a main frame 12 supported on front and rear wheels 14 and 16. The harvesting machine 10 is operated from a driver's cab 18, from which a harvesting header 20 is visible. The crop, e.g., corn or the like, cut off the ground by the harvesting header 20, is moved by means of two upper feedrolls 30 and two lower feedrolls 32 to a chopper means 22 in form of a chopper drum or cutter head, which chops the crop into small pieces and sends it to a conveyor unit 24. The material passes from the harvesting machine 10 to a side trailer via a discharge chute 26, which may be adjusted about an upright axis and a horizontal axis. Located between the chopper means 22 and the conveyor unit 24 is a kernel processor device including two cooperating kernel processor rollers 28, which act to feed the conveyed material tangentially to the conveyor unit 24 and between which a gap is defined to open the kernels within the crop for better digestibility. Upon the top surface of the discharge chute 26, a first sensor arrangement 34 and a second sensor 36 are mounted.

The first sensor arrangement 34 is mounted within a light-tight, protective housing 38 mounted to the discharge chute 26. Within the housing 38, a flashlight 40 and an electronic camera 42 are provided. The camera 42 has a lens viewing through an opening 44 into the interior of the discharge chute 26, such that an image of the chopped crop particles flowing through the discharge chute 26 is obtained. Another possible embodiment comprises a ring flash around the camera lens or a flashlight on both sides of the camera 42, the latter then arranged in a plane perpendicular to the opening 44. The flashlight 40 is operable to submit subsequently flashes, e. g. in intervals of 500 ms or less, with very short time duration (10 µs or less) synchronized with the camera 42, upon the chopped crop particles in the viewing angle of the lens. Although not shown, on the underside of the discharge chute 26, below the opening 44, a cover for avoiding or reducing entry of ambient light might be provided. Within the opening 44, a transparent screen may be provided, preferably with high scratch resistance, e.g. of sapphire glass.

The camera 42 provides an electronic signal containing two-dimensional picture information to a digital image processing system 46 using a microprocessor or microcontroller. The image processing system 46 is operable to process the picture information, and derives data on granulometric characteristics of the crop particles. The granulometric data contain information on the particle size such as the mean length of the chopped crop particles. The image processing system 46 also controls the flashlight 40 and instructs it to submit a flash once processing of a previously taken image is finalized and a capacitor of the flashlight is sufficiently charged such that a flash can be provided. Details of the image processing system 46 and its operation are mentioned in European patent application 08101053.0, the contents of which are incorporated herein by reference. The image processing system 46 can be included in the housing 38 or incorporated into a control unit 48. The image processing system 46 also identifies kernels in the crop, which can be identified by their yellow colour, and decides between uncracked kernels and cracked kernels. Cracked kernels can be identified by their disrupt shape, while uncracked kernels can be identified by the intact, i. e. relatively sharp bordered shape. In one image, the number of uncracked kernels is counted to provide an absolute number of uncracked kernels, or it is divided by the entire number of kernels to provide a relative number of uncracked kernels.

The control unit 48 is connected to an actuator 50 in the form of an electric or hydraulic motor that can move the upper kernel processor roller 28 upwardly and downwardly by means of a suited spindle mechanism. In another embodiment (not shown) the actuator 50 adjusts the position of one end of a pressure spring, wherein the other end thereof is connected to the upper kernel processor roller 28 to adjust the pressing force of the kernel processor rollers 28. Further, the control unit 48 is connected to a user interface 52 arranged at the operator's workplace in the cab 18. The operator can input a value for an acceptable portion of uncracked kernels into the user interface 52 and thus to the control unit 48.

During a harvesting operation, the control unit 48 receives the acceptable portion of uncracked kernels from the user interface 52 and the actually sensed portion of uncracked kernels from the image processing system 46. If the sensed portion of uncracked kernels is larger than the acceptable portion of uncracked kernels, the control unit 48 instructs the actuator 50 to decrease the gap between the kernel processor rollers 28, and vice versa. In particular, if the sensed portion of uncracked kernels is initially larger than the acceptable portion, the control unit 48 instructs the actuator 50 to close the gap (and/or increase the pressing force in the other embodiment) until the portion of uncracked kernels is equal to the acceptable portion, but not further. Analogously, if the sensed portion of uncracked kernels is initially smaller than the acceptable portion, the control unit 48 instructs the actuator 50 to open the gap (and/or decrease the pressing force in the other embodiment) until the portion of uncracked kernels is equal to the acceptable portion, but not further. In order to avoid unwanted excessive control operations by providing a hysteresis, a tolerance band can be defined around the acceptable portion, such that the actuator 50 is instructed to move the kernel processor only if the portion of uncracked kernels is outside the tolerance band.

It needs to be mentioned that the acceptable amount of uncracked kernels could in particular be defined as zero. If there are no uncracked kernels in the crop flow the kernel processor rollers 28 are adjusted further away from each other to reduce the power consumption of the kernel processor. As soon as there are uncracked kernels in the crop flow the gap widening stops and the rollers 28 are adjusted a little closer together. The sensor 34 is constantly searching for uncracked kernels and the kernel processor gap is adjusted accordingly.

The second sensor 36 is mounted upon the spout 26 in front of the sensor arrangement 34, although it could be mounted behind it, or both could be provided within a single housing. The second sensor 36 is a near infrared sensor comprising a light source 54 illuminating the crop flow through an opening 56, a refractive mirror 58 and an array 60 of light sensitive elements, like CCDs or photo diodes. The light from the source 54 reflected by the crop stream is diffracted by the mirror 58 into wavelength-dependent directions onto the array 60, which is connected to a processing unit 62 within a housing 64 of the second sensor 36. Within the opening 56, a transparent screen may be provided, preferably with high scratch resistance, e.g. of sapphire glass. The processing unit 62 processes the signals from the array 60 and derives crop properties, like protein content and moisture, and submits corresponding signals to the control unit 48.

The control unit 48 derives from the moisture signals and an input from the user interface 52 regarding the desired relation between moisture and cut length a desired length of cut. The control unit 48 is further connected to an actuator 66 controlling the position of a swash plate of a hydraulic motor 68 driving the feedrolls 30, 32 via a drivetrain (not shown). Based upon the desired length of cut (from the second sensor 36 and the user interface 52) and the actual length of cut (measured by the sensor arrangement 34 comprising the camera 38 and the image processing system 46), the control unit 48 controls the hydraulic motor 68 such that the actual cut length corresponds to the intended cut length.

It should be mentioned that different modifications to the invention are possible. For example, it would be possible to use the moisture signal from the second sensor 36 as another input of the control unit 48 for controlling the gap between the kernel processor rollers 28 or for defining the acceptable portion of uncracked kernels in the crop stream, such that moist crop would be cracked less rigorously than dry crop (or vice versa), whereby the impact of the moisture on the cracking action can be preferably input via the user interface 52. Another possible control input parameter for the control unit 48 for adjusting the kernel processor roller gap and/or force is the actual crop throughput, which can be sensed with a sensor detecting the position of the upper feedrolls 30 that are biased by springs against the lower feedrolls 32. The sensor arrangement 34 can also be located at a point on the spout 26 or on the harvesting machine 10 between the kernel processor rollers 28 and the rotatable support of the spout 26 on the body of the harvesting machine 10.

## Claims

1. A forage harvester (10) comprising:
a chopper means (22) for cutting harvested crop into short lengths,
a kernel processor with at least two rotatively driven rollers (28) defining a gap arranged in the crop flow downstream the chopper means (22) for cracking kernels in the crop,
a sensor arrangement (34) for sensing crop properties,
a control unit (48) coupled to the sensor arrangement (34) and to an actuator (50) operable to adjust the kernel processor gap and/or pressing force of the kernel processor rollers (28) based upon the signals of the sensor arrangement (34),
**characterized in that** the sensor arrangement (34) includes a camera (42) viewing upon the crop flow downstream the kernel processor rollers (28) and an image processing system (46) connected to the camera (42),
that the image processing system (46) is operable to derive the portion of uncracked kernels in the crop flow viewed by the camera (42),
and that the control unit (48) is operable to adjust the kernel processor gap based upon the detected portion of uncracked kernels.

2. A forage harvester (10) according to claim 1, **characterized in that** the control unit (48) is operable to adjust the kernel processor gap to the largest size and/or the pressing force of the kernel processor rollers (28) to the smallest value at which only an acceptable portion of uncracked kernels is contained in the crop flow.

3. A forage harvester (10) according to claim 2, **characterized in that** the portion of uncracked kernels is an absolute value or a relative value.

4. A forage harvester (10) according to claim 2 or 3, **characterized in that** the control unit (48) is further coupled to a user interface (52) enabling input of the acceptable portion of uncracked kernels in the crop flow.

5. A forage harvester (10) according to one of claims 1 to 4, **characterized in that** the control unit (48) is further coupled to a sensor (36) for sensing at least one crop property, for example the crop moisture and/or throughput, and that the control unit is operable to adjust the kernel processor gap and/or force also based on the sensed crop property.

6. A forage harvester (10) according to claim 5, **characterized in that** the control unit (48) is further coupled to a user interface (52) enabling input of a desired relation between the crop property and the kernel processor gap and/or force.

7. A forage harvester (10) according to one of claims 1 to 6, **characterized in that** it further includes a crop feed arrangement for feeding the harvested crop to the chopper means (22), a drive arrangement for driving the crop feed arrangement and the chopper means (22), the drive arrangement including at least one adjustable component for driving at least one of said crop feed arrangement or chopper means (22) at a variable speed so as to change the length into which the harvested crop is cut, that the control unit (48) is connected to the adjustable component, that the image processing system (46) is operable to supply the size of the chopped crop to the control unit (48), and that the control unit (48) is operative to automatically control the adjustable component such that the length into which crop is cut by said chopper means (22) corresponds to a desired length of cut.

8. A forage harvester (10) according to one of claims 1 to 7, **characterized in that** the control unit (48) is further coupled to a sensor (36) for sensing at least one crop property, for example the crop moisture, and that the control unit (48) is operable to define the desired length of cut based on the sensed crop property.

9. A forage harvester (10) according to claim 8, **characterized in that** the control unit (48) is further coupled to a user interface (52) enabling input of a desired relation between the crop property and the desired length of cut.

10. A forage harvester (10) according to one of claims 1 to 9, **characterized in that** the crop sensor arrangement (34) comprises a flashlight (40) for illuminating the crop particles within the viewing range of the camera (42) with successive flashes.

11. A forage harvester (10) according to claim 10, **characterized in that** the flashlight (40) is operable to provide flashes of controlled flash duration and is synchronized with the camera (42).

12. A method of controlling a forage harvester (10) that comprises a chopper means (22) for cutting harvested crop into short lengths, a kernel processor with at least two rotatively driven kernel processor rollers (28) defining a gap arranged in the crop flow downstream the chopper means (22) for cracking kernels in the crop, a sensor arrangement (34) for sensing crop properties, a control unit (48) coupled to the sensor arrangement (34) and to an actuator (50) operable to adjust the kernel processor gap and/or pressing force of the kernel processor rollers (28) based upon the signals of the sensor arrangement (34), **characterized in that** the sensor arrangement (34) includes a camera (42) viewing upon the crop flow downstream the kernel processor (28) and an image processing system (46) connected to the camera (42), and that the method comprises the following steps:
the image processing system (46) derives the portion of uncracked kernels in the crop flow viewed by the camera (42),
and the control unit (48) adjusts the kernel processor gap based upon the detected portion of uncracked kernels.

## Patentansprüche

1. Feldhäcksler (10), umfassend:
eine Häckseleinrichtung (22) zum Schneiden von Erntegut in kurze Längen,
eine Körnernachbehandlungsvorrichtung mit mindestens zwei drehangetriebenen Walzen (28), die einen Spalt definieren, der in dem Erntegutstrom stromabwärts der Häckseleinrichtung (22) zum Aufbrechen von Körnern im Erntegut angeordnet ist,
eine Sensoranordnung (34) zur Erfassung von Ernteguteigenschaften,
eine Steuereinheit (48), die mit der Sensoranordnung (34) und einem Aktuator (50) gekoppelt ist, der dahingehend betätigbar ist, den Körnernachbehandlungsvorrichtungspalt und/oder die Presskraft für die Walzen (28) der Körnernachbehandlungsvorrichtung auf Grundlage der Signale der Sensoranordnung (34) einzustellen,
**dadurch gekennzeichnet, dass** die Sensoranordnung (34) eine Kamera (42), die auf den Erntegutstrom stromabwärts der Walzen (28) der Körnernachbehandlungsvorrichtung blickt, und ein Bildverarbeitungssystem (46), das mit der Kamera (42) verbunden ist, enthält,
das Bildverarbeitungssystem (46) dahingehend betreibbar ist, den Teil nicht aufgebrochener Körner im Erntegutstrom, der von der Kamera (42) erblickt wird, abzuleiten,
und die Steuereinheit (48) dahingehend betreibbar ist, den Körnernachbehandlungsvorrichtungsspalt auf Grundlage des erfassten Teils nicht aufgebrochener Körner einzustellen.

2. Feldhäcksler (10) nach Anspruch 1, **dadurch gekennzeichnet, dass** die Steuereinheit (48) dahingehend betreibbar ist, den Körnernachbehandlungsvorrichtungsspalt auf die größte Größe und/oder die Presskraft der Walzen (28) der Körnernachbehandlungsvorrichtung auf den kleinsten Wert, bei der bzw. bei dem nur ein akzeptabler Teil nicht aufgebrochener Körner in dem Erntegutstrom enthalten ist, einzustellen.

3. Feldhäcksler (10) nach Anspruch 2, **dadurch gekennzeichnet, dass** der Teil nicht aufgebrochener Körner ein absoluter Wert oder ein relativer Wert ist.

4. Feldhäcksler (10) nach Anspruch 2 oder 3, **dadurch gekennzeichnet, dass** die Steuereinheit (48) weiterhin mit einer Benutzerschnittstelle (52) gekoppelt ist, die Eingabe des akzeptablen Teils nicht aufgebrochener Körner in den Erntegutstrom ermöglicht.

5. Feldhäcksler (10) nach einem der Ansprüche 1 bis 4, **dadurch gekennzeichnet, dass** die Steuereinheit (48) weiterhin mit einem Sensor (36) zur Erfassung mindestens einer Ernteguteigenschaft, zum Beispiel Erntegutfeuchtigkeit und/oder -durchsatz, gekoppelt ist, und dass die Steuereinheit dahingehend betreibbar ist, den Körnernachbehandlungsvorrichtungsspalt und/oder die Kraft auch auf Grundlage der erfassten Ernteguteigenschaft einzustellen.

6. Feldhäcksler (10) nach Anspruch 5, **dadurch gekennzeichnet, dass** die Steuereinheit (48) weiterhin mit einer Benutzerschnittstelle (52) gekoppelt ist, die Eingabe einer gewünschten Beziehung zwischen der Ernteguteigenschaft und dem Körnernachbehandlungsvorrichtungsspalt und/oder der Kraft ermöglicht.

7. Feldhäcksler (10) nach einem der Ansprüche 1 bis 6, **dadurch gekennzeichnet, dass** er weiterhin eine Erntegutzuführanordnung zum Zuführen des Ernteguts zu der Häckseleinrichtung (22) und eine Antriebsanordnung zum Antrieb der Erntegutzuführanordnung und der Häckseleinrichtung (22) enthält, wobei die Antriebsanordnung mindestens eine verstellbare Komponente zum Antrieb der Erntegutzuführanordnung und/oder der Häckseleinrichtung (22) mit einer variablen Geschwindigkeit zur Änderung der Länge, auf die das Erntegut geschnitten wird, enthält, die Steuereinheit (48) mit der verstellbaren Komponente gekoppelt ist, das Bildverarbeitungssystem (46) dahingehend betreibbar ist, die Größe des gehäckselten Ernteguts der Steuereinheit (48) zuzuführen und die Steuereinheit (48) dahingehend betreibbar ist, die einstellbare Komponente automatisch so zu steuern, dass die Länge, auf die das Erntegut durch die Häckseleinrichtung (22) geschnitten wird, einer gewünschten Schnittlänge entspricht.

8. Feldhäcksler (10) nach einem der Ansprüche 1 bis 7, **dadurch gekennzeichnet, dass** die Steuereinheit (48) weiterhin mit einem Sensor (36) zur Erfassung mindestens einer Ernteguteigenschaft, zum Beispiel Erntegutfeuchtigkeit, gekoppelt ist, und die Steuereinheit (48) dahingehend betreibbar ist, die gewünschte Schnittlänge auf Grundlage der erfassten Ernteguteigenschaft zu definieren.

9. Feldhäcksler (10) nach Anspruch 8, **dadurch gekennzeichnet, dass** die Steuereinheit (48) weiterhin mit einer Benutzerschnittstelle (52) gekoppelt ist, die die Eingabe einer gewünschten Beziehung zwischen der Ernteguteigenschaft und der gewünschten Schnittlänge ermöglicht.

10. Feldhäcksler (10) nach einem der Ansprüche 1 bis 9, **dadurch gekennzeichnet, dass** die Erntegutsensoranordnung (34) ein Blitzlicht (40) zur Beleuchtung der Erntegutpartikel in dem Sichtbereich der Kamera (42) mit aufeinanderfolgenden Blitzen umfasst.

11. Feldhäcksler (10) nach Anspruch 10, **dadurch gekennzeichnet, dass** das Blitzlicht (40) zur Bereitstellung von Blitzen mit gesteuerter Blitzdauer betreibbar und mit der Kamera (42) synchronisiert ist.

12. Verfahren zum Steuern eines Feldhäckslers (10), der eine Häckseleinrichtung (22) zum Schneiden von Erntegut in kurze Längen, eine Körnernachbehandlungsvorrichtung mit mindestens zwei drehangetriebenen Walzen (28), die einen Spalt definieren, der in dem Erntegutstrom stromabwärts der Häckseleinrichtung (22) zum Aufbrechen von Körnern im Erntegut angeordnet ist, eine Sensoranordnung (34) zur Erfassung von Ernteguteigenschaften, eine Steuereinheit (48), die mit der Sensoranordnung (34) und einem Aktuator (50) gekoppelt ist, der dahingehend betätigbar ist, den Körnernachbehandlungsvorrichtungspalt und/oder die Presskraft für die Walzen (28) der Körnernachbehandlungsvorrichtung auf Grundlage der Signale der Sensoranordnung (34) einzustellen, **dadurch gekennzeichnet, dass** die Sensoranordnung (34) eine Kamera (42), die auf den Erntegutstrom stromabwärts der Walzen (28) der Körnernachbehandlungsvorrichtung (28) blickt, und ein Bildverarbeitungssystem (46), das mit der Kamera (42) verbunden ist, enthält, und das Verfahren die folgenden Schritte umfasst:
das Bildverarbeitungssystem (46) leitet den Teil nicht aufgebrochener Körner im Erntegutstrom, der von der Kamera (42) erblickt wird, ab,
und die Steuereinheit (48) stellt den Körnernachbehandlungsvorrichtungsspalt auf Grundlage des erfassten Teils nicht aufgebrochener Körner ein.

## Revendications

1. Récolteuse-hacheuse (10), comprenant:
des moyens de hachage (22) pour couper une récolte récoltée en tronçons courts;
un processeur de grains comprenant au moins deux rouleaux entraînés de façon rotative (28) qui définissent un espace qui est formé dans le flux de la récolte en aval des moyens de hachage (22) afin de faire éclater les grains dans la récolte;
un agencement de capteur (34) afin de détecter des propriétés de la récolte;
une unité de commande (48) qui est couplée à l'agencement de capteur (34) ainsi qu'à un actionneur (50) qui peut être actionné afin de régler l'espace du processeur de grains et/ou la force de pression des rouleaux de processeur de grains (28) sur la base des signaux de l'agencement de capteur (34);
**caractérisé en ce que** l'agencement de capteur (34) comprend une caméra (42) qui surveille le flux de la récolte en aval des rouleaux de processeur de grains (28), et un système de traitement d'image (46) qui est connecté à la caméra (42),
**en ce que** le système de traitement d'image (46) peut être actionné afin de dériver la partie de grains non éclatés dans le flux de la récolte qui est surveillé par la caméra (42), et
**en ce que** l'unité de commande (48) peut être activée afin de régler l'espace du processeur de grains sur la base de la partie détectée de grains non éclatés.

2. Récolteuse-hacheuse (10) selon la revendication 1, **caractérisée en ce que** l'unité de commande (48) peut être activée afin de régler l'espace du processeur de grains à la plus grande taille, et/ou la force de pression des rouleaux du processeur de grains (28) à la plus petite valeur à laquelle une partie acceptable seulement de grains non éclatés soit contenue dans le flux de la récolte.

3. Récolteuse-hacheuse (10) selon la revendication 2, **caractérisée en ce que** la partie de grains non éclatés est une valeur absolue ou une valeur relative.

4. Récolteuse-hacheuse (10) selon la revendication 2 ou 3, **caractérisée en ce que** l'unité de commande (48) est en outre couplée à une interface d'utilisateur (52) qui permet l'entrée de la partie acceptable de grains non éclatés dans le flux de la récolte.

5. Récolteuse-hacheuse (10) selon l'une quelconque des revendications 1 à 4, **caractérisée en ce que** l'unité de commande (48) est en outre couplée à un capteur (36) afin de détecter au moins une propriété de la récolte, par exemple l'humidité et/ou le rendement de la récolte, et **en ce que** l'unité de commande peut être activée afin de régler l'espace et/ou la force du processeur de grains également sur la base de la propriété de la récolte détectée.

6. Récolteuse-hacheuse (10) selon la revendication 5, **caractérisée en ce que** l'unité de commande (48) est en outre couplée à une interface d'utilisateur (52) qui permet l'entrée d'une relation souhaitée entre la propriété de la récolte et l'espace et/ou la force du processeur de grains.

7. Récolteuse-hacheuse (10) selon l'une quelconque des revendications 1 à 6, **caractérisée en ce qu'**elle comprend en outre un agencement d'alimentation de récolte pour amener la récolte récoltée jusqu'aux moyens de hachage (22), un agencement d'entraînement pour entraîner l'agencement d'alimentation de récolte et les moyens de hachage (22), l'agencement d'entraînement comprenant au moins un composant réglable pour entraîner au moins soit l'agencement d'alimentation de récolte, soit les moyens de hachage (22) à une vitesse variable de manière à changer la longueur à laquelle la récolte récoltée est coupée, **en ce que** l'unité de commande (48) est connectée au composant réglable, **en ce que** le système de traitement d'image (46) peut être actionné pour communiquer la taille de la récolte hachée à l'unité de commande (48), et **en ce que** l'unité de commande (48) peut être activée pour commander automatiquement le composant réglable, de telle sorte que la longueur à laquelle la récolte est coupée par lesdits moyens de hachage (22) corresponde à une longueur de coupe souhaitée.

8. Récolteuse-hacheuse (10) selon l'une quelconque des revendications 1 à 7, **caractérisée en ce que** l'unité de commande (48) est en outre couplée à un capteur (36) afin de détecter au moins une propriété de la récolte, par exemple l'humidité de la récolte, et **en ce que** l'unité de commande (48) peut être activée afin de définir la longueur de coupe souhaitée sur la base de la propriété détectée de la récolte.

9. Récolteuse-hacheuse (10) selon la revendication 8, **caractérisée en ce que** l'unité de commande (48) est en outre couplée à une interface d'utilisateur (52) qui permet l'entrée d'une relations souhaitée entre la propriété de la récolte et la longueur de coupe souhaitée.

10. Récolteuse-hacheuse (10) selon l'une quelconque des revendications 1 à 9, **caractérisée en ce que** l'agencement de capteur de récolte (34) comprend une lumière flash (40) pour éclairer les particules de récolte à l'intérieur du champ de vision de la caméra (42) avec des flashes successifs.

11. Récolteuse-hacheuse (10) selon la revendication 10, **caractérisée en ce que** la lumière flash (40) peut être actionnée afin de déclencher des flashes d'une durée d'éclairage commandée et est synchronisée avec la caméra (42).

12. Procédé de commande d'une récolteuse-hacheuse (10), comprenant des moyens de hachage (22) pour couper une récolte récoltée en tronçons courts, un processeur de grains comprenant au moins deux rouleaux de processeur de grains entraînés de façon rotative (28) qui définissent un espace formé dans le flux de la récolte en aval des moyens de hachage (22) afin de faire éclater les grains dans la récolte, un agencement de capteur (34) afin de détecter des propriétés de la récolte, une unité de commande (48) qui est couplée à l'agencement de capteur (34) ainsi qu'à un actionneur (50) qui peut être actionné afin de régler l'espace du processeur de grains et/ou la force de pression des rouleaux de processeur de grains (28) sur la base des signaux de l'agencement de capteur (34), **caractérisé en ce que** l'agencement de capteur (34) comprend une caméra (42) qui surveille le flux de la récolte en aval du processeur de grains (28), et un système de traitement d'images (46) qui est connecté à la caméra (42), et **en ce que** le procédé comprend les étapes suivantes:
le système de traitement d'image (46) dérive la partie de grains non éclatés dans le flux de la récolte surveillé par la caméra (42), et
l'unité de commande (48) règle l'espace du processeur de grains sur la base de la partie détectée de grains non éclatés.
